# EUROPÄISCHE PATENTSCHRIFT

(11) **EP 0 733 306 B1**
(45) Veröffentlichungstag und Bekanntmachung des Hinweises auf die Patenterteilung: **05.12.2001**
(21) Anmeldenummer: 96104123.3
(22) Anmeldetag: 15.03.1996
(51) Int. Cl.: A22C 13/00

(54) **Verfahren zur Herstellung von mit verringerter Viskosemenge hergestellten faserverstärkten Nahrungsmittelhüllen auf Cellulosehydratbasis**
Process for the production of fiber-reinforced food casings based on cellulose hydrate, which have been produced with a reduced amount of viscose solution
Procédé pour la fabrication des enveloppes pour aliments à base d'hydrate de cellulose comprenant un renforcement fibreux et obtenu avec une quantité réduite de viscose

(30) Priorität: 24.03.1995 DE 19510883
(43) Veröffentlichungstag der Anmeldung: 25.09.1996
(73) Patentinhaber: HOECHST AKTIENGESELLSCHAFT, 65926 Frankfurt am Main (DE)
(72) Erfinder: Hammer, Klaus-Dieter, Dr., 55120 Mainz (DE); Gord, Herbert, Dipl.-Ing., 55218 Ingelheim (DE); Grolig, Gerhard, Dr., 64546 Mörfelden-Walldorf (DE); Siebrecht, Manfred, Dr., 65207 Wiesbaden (DE)
(74) Vertreter: Zounek, Nikolai, Dipl.-Ing.

(56) Entgegenhaltungen:
- EP-A- 0 460 348
- WO-A-82/02649
- WO-A-91/09530
- DE-A- 1 965 129
- DE-A- 1 965 130
- DE-A- 2 900 563

## Beschreibung

Die Erfindung betrifft ein Verfahren zur Herstellung einer faserverstärkten, schlauchförmigen Nahrungsmittelhülle auf der Basis von regenerierter Cellulose. Diese Hülle wird bevorzugt als Wursthülle verwendet.

Faserverstärkte Nahrungsmittelhüllen auf Cellulosehydratbasis sind bereits seit 1933 in den USA und seit 1936 in Deutschland auf dem Markt und werden seither sukzessive verbessert. Im allgemeinen stellt man sie nach dem Viskoseverfahren her, bei dem eine als "Viskoselösung" bezeichnete Cellulosexanthogenat-Lösung auf ein meist schlauchförmiges Faservlies aufgetragen wird. Wird diese Viskoselösung nur auf die Außenseite aufgetragen, spricht man von einer "Außenviskosierung" (DE-A 19 65 129), während man die Beschichtung der Außen- und Innenseite "Doppelviskosierung" (DE-A 19 65 130) nennt. Das viskosierte Fasermaterial wird dann durch Spinn- und Fällbäder geführt, die jeweils Schwefelsäure, Ammoniumsulfat und Natriumsulfat in verschiedenen Konzentrationen enthalten. Dabei wird die Viskose zunächst koaguliert und über Xanthogensäure dann das Cellulosehydrat regeneriert. Anschließend wird der so hergestellte Cellulosehydratschlauch durch mehrere Waschbäder geführt. Die Spinngeschwindigkeit (und entsprechend die Geschwindigkeit mit der die Hülle durch die Bäder gezogen wird) beträgt dabei etwa 20 bis 28 m/min, abhängig von der verwendeten Darmspinnmaschine. Die Cellulosehydrathüllen werden üblicherweise noch mit einem sekundären Weichmacher, wie Glycerin, behandelt und dann getrocknet.

Das Faservlies (= Faserpapier) besteht in der Regel aus Hanffasern. Üblich sind Faserpapiere mit einem Gewicht von 13 g, 15 g, 17 g, 19 g, 21 g, 23,7 g und 25,4 g pro Quadratmeter. Die Anteile der regenerierten Cellulose und des Weichmachers bleiben relativ konstant. So liegt der Anteil an Cellulosehydrat im allgemeinen bei 40 bis 55 g/m² und der Anteil an Glycerin bei 15 bis 30 g/m². Die Nahrungsmittelhüllen enthalten darüber hinaus etwa 8 bis 10 Gew.-% an Wasser, bezogen auf ihr Gesamtgewicht, das - abhängig vom Durchmesser - etwa 75 bis 105 g/m² beträgt. Sie sind opak, so daß man ihren Inhalt nicht erkennen kann, und zudem steif, was die Konfektionierung und Verarbeitung behindert.

Eine Möglichkeit, diese Probleme zu lösen, besteht darin, leichteres Faserpapier zu verwenden. So ist in der WO 91/09530 (= EP-B 0 460 146) eine schlauchförmige Nahrungsmittelhülle auf der Basis von Cellulosehydrat offenbart, die mit einem langfaserigen Manilafaser-Papier mit einem Gewicht von nicht mehr als 15 g/m² (im lufttrockenen Zustand) verstärkt ist.

Die Verwendung von dünnerem Papier bei gleichbleibender Viskosemenge ist relativ kostenintensiv. Eine Reduktion der Viskoselösung bei gleichbleibendem Faserpapiergewicht zur Verbesserung der Transparenz führt jedoch zu einer stark verminderten Festigkeit.

Es bestand daher die Aufgabe, ein Verfahren zur Herstellung einer faserverstärkten, transparenten Nahrungsmittelhülle auf Cellulosehydratbasis zur Verfügung zu stellen, die geschmeidiger ist als die bekannten Hüllen und zudem preiswerter herstellbar.

Gelöst wird die Aufgabe durch ein Verfahren zur Herstellung einer faserverstärken, schlauchförmigen Nahrungsmittelhülle auf der Basis von regenerierter Cellulose, die dadurch gekennzeichnet ist, daß darin eine um 10 bis 30 % gegenüber dem Standard der 40 bis 55g/m² an Cellulosehydrat ergibt, verminderte Menge an Viskoselösung bei einer gegenüber dem üblicher Wert von 20 bis 28 m/min um mindestens 25 % erhöhten Spinngeschwindigkeit eingesetzt wird. Die Viskosemenge ist bevorzugt um 15 bis 25 % reduziert. Die Spinngeschwindigkeit ist bevorzugt um 25 bis 60 % erhöht. Absolutwerte für die Spinngeschwindigkeit lassen sich nur schwer angegeben, da die optimale Geschwindigkeit mit der Bauart der Spinnmaschine variiert.

Bei der erhöhten Spinngeschwindigkeit ist eine Änderung der Zusammensetzung der Spinn- und Fällbäder nicht erforderlich. Bei "Standardgeschwindigkeit" und gleichzeitig verminderter Menge an Viskoselösung ist dagegen eine grundlegende Änderung in der Zusammensetzung der Spinn- und Fällbäder notwendig.

Zu erwarten war bei abnehmender Auftragsmenge an Viskose eigentlich eine mehr oder weniger starke Abnahme der mechanischen Festigkeit der Nahrungsmittelhüllen. Überraschenderweise wurde jedoch genau das Gegenteil gefunden. So hielten die nach dem erfindungsgemäßen Verfahren hergestellten Nahrungsmittelhüllen einem 5 bis 20 % höheren Innendruck stand bevor sie platzten als die mit der "normalen" Menge an Viskoselösung hergestellten (bei jeweils identischem Faserpapiergewicht). Bei der Untersuchung unter dem Elektronenmikroskop zeigte sich, daß bei den nach dem erfindungsgemäßen Verfahren hergstetten Nahrungsmittelhüllen der Anteil der "dichten" Cellulosehydratzonen zugenommen hatte. Diese dichten Zonen auf der Innen- und Außenseite bestimmen in erster Linie die mechanische Festigkeit der Hülle. Die Zunahme steht in Relation zur Verkleinerung der "lockeren" Cellulosehydratzone im Inneren der Hülle.

Die nach dem erfindungsgemäßen Verfahren hergestellten Nahrungsmittelhüllen werden bevorzugt mit einem Faserpapier mit einem Gewicht von mindestens 17 g/m², besonders bevorzugt 17 bis 25,4 g/m², hergestellt. Das Faserpapier besteht bevorzugt aus Hanffasern. Die Hüllen sind außen- oder doppelviskosiert.

Die nach dem erfindungsgemäßen Verfahren hergestellten Nahrungsmittelhüllen können zusätzliche polymere Verbindungen enthalten, die bei der Regeneration kein Gas bilden. Diese sind vorzugsweise celluloseähnlich (EP-A 0 460 348). Solche, mit der Viskoselösung mischbaren Verbindungen sind z.B. Alginate oder hochmolekulare Copolymere, die überwiegend Vinylpyrrolidon-Einheiten enthalten (^{(R)}Gafquat 755N). Diese Polymere steuern nicht nur die Regeneration, sondern dienen auch noch als primäre (= beim Wässern in der Hülle verbleibende) Weichmacher, so daß auf einen sekundären (= durch Wässern aus der Hülle entfernbaren) Weichmacher, wie Glycerin, verzichtet werden kann. Der Anteil an zusätzlichen polymeren Verbindungen beträgt etwa 5 bis 20 Gew.-%, bezogen auf das Gewicht der trockenen Cellulose.

Die nach dem erfindungsgemäßen Verfahren hergestellten Nahrungsmittelhüllen können zusätzlich mit einer üblichen Innenimprägnierung, z.B. aus Casein/Glyoxal, versehen sein.

Gegenüber den Standardhüllen ist das Gewicht der nach dem erfindungsgemäßen Verfahren hergestellten Nahrungsmittelhüllen mit Glycerin etwa 10 bis 15 % und ohne Glycerin etwa 15 bis 25 % niedriger.

Bedingt durch die geringere Wandstärke lassen sich besonders lange Hüllenabschnitte zu sogenannten "Raupen" aufstocken, so daß eine noch rationellere Verarbeitung möglich ist. Die Hüllen lassen sich in gewässertem oder ungewässertem Zustand füllen.

Verwendet werden die Nahrungsmittelhüllen besonders als Wursthüllen, speziell für schnellgereifte Dauerwursttypen (z.B. die sog. "Bergsteigerwurst" oder die "Rauchbunkerl", eine österreichische Spezialität) und für geräucherte Brühwursttypen. Aufgrund der verminderten Wandstärke zeigt die erfindungsgemäße Hülle eine höhere Permeation (Wasserdurchlässigkeit unter Druck). Bei Standardhüllen liegt die Permeation bei einem Innendruck von 40 bar bei etwa 90 bis 110 1 Wasser pro Quadratmeter und pro Tag, bei den erfindungsgemäßen dagegen um 20 bis 40 % darüber.

Bei der Herstellung von Dauerwurst erfolgt die Abtrocknung nach dem Füllen besonders schnell. Bei schnellgereiften Dauerwursttypen bewirkt ein Zusatz von Gluconsäure-δ-lacton (GDL) eine schnellere Koagulation, was eine schnellere Wasserabgabe erfordert. Die Transparenz ist gut, so daß die Brätoberfläche deutlich sichtbar ist.

Schließlich sind die dünneren Faserhüllen besonders schnell biologisch abbaubar und damit gut kompostierbar.

Die nachfolgenden Beispiele erläutern die Erfindung. Die Daten der Standardhüllen und der nach dem erfindungsgemäßen Verfahren hergstellten Hüllen sind in den Tabellen 1 bis 3 gegenübergestellt.

### Beispiel 1

Ein 17 g Hanffaserpapier wurde zu einem Schlauch mit einem Durchmesser von 68 mm (= Kaliber 68) geformt und außenviskosiert. Die Menge an Viskoselösung lag um 15 Gew.-% unter der üblicherweise verwendeten. Die so beschichtete, schlauchförmige Hülle wurde mit einer um 30 % über dem Standard liegenden Geschwindigkeit durch die üblichen Spinn-, Fäll-, Wasch- und Weichmacherkufen geführt. Vor dem Trocknen wurde der Schlauch dann noch von innen mit einer wäßrigen Lösung imprägniert, die Casein und Glyoxal enthielt. Die im aufgeblasenen Zustand getrocknete Hülle wurde dann aufgestockt (gerafft). Jede Raupe bestand aus 50 m der Hülle. Beim Füllen auf einem Füll- und Clip-Automaten (Typ FCA der Niedecker GmbH, Frankfurt/M.) kam es zu keinen Ausfällen. Das Füllkaliber schwankte zwischen 73,5 und 75 mm. Beim Reifen waren die Würste nach einer um 10 bis 15 % kürzeren Zeit abgetrocknet. Ihr Aussehen war sehr gut. Die Schälbarkeit nach einer Lagerzeit von 2 Wochen wurde mit "2" (= normal; subjektive Bewertungsskala von 1 = "sehr leicht" bis 6 = "ungenügend") beurteilt.

**Tabelle 1**

| Merkmale | Vergleich 68er FDI Standard | Erfindung 68er FDI/ leicht | Abweichung in % |
|---|---|---|---|
| m²-Gewicht, g | 84 | 74,0 | -12,0 |
| Glycerin, Gew.-% | 23 | 22,3 | - 3,1 |
| Platzdruck, kPa | 71 | 78 | +10,0 |
| Prüfkaliber in mm bei 21 kPa | 71,9-74,9 φ 73,4 | 73,8 | + 0,5 |
| Quellwert, % | 130 | 137,2 | + 5,5 |
| Permeation, l/m²·d bei 40 bar | 100 | 115 | +15,0 |

### Beispiel 2

Ein 17 g Hanffaserpapier wurde zu einem Schlauch vom Kaliber 48 geformt und von außen mit Viskose beschichtet. Die dazu verwendete Viskoselösung enthielt 10 Gew.-% einer 4%igen wäßrigen Na-Alginatlösung. Der Anteil an Alginat in der fertigen Hülle betrug etwa 5 Gew.-%, bezogen auf das Gewicht der (trockenen) Cellulose. Zum Beschichten wurde eine um 15 Gew.-% gegenüber dem Standard verringerte Menge an Viskoselösung verwendet. Der Schlauch wurde mit einer um 47 % gegenüber dem Standard erhöhten Geschwindigkeit durch die üblichen Bäder (siehe Beispiel 1) gezogen, anschließend innenimprägniert, im aufgeblasenen Zustand getrocknet, dann flachgedrückt und aufgewickelt. Stücke von jeweils 50 m Länge wurden zu einer Raupe gerafft. Beim Füllen auf dem genannten Füll- und Clip-Automaten kam es zu keinen Ausfällen. Das Füllkaliber betrug 48 bis 49,5 mm. Der Reifeverlauf war normal. Das Aussehen der Würste war sehr gut. Die Schälbarkeit wurde mit "2" beurteilt.

**Tabelle 2**

| Merkmale | Vergleich 48er FDI Standard | Erfindung 48er FDI/ leicht | Abweichung in % |
|---|---|---|---|
| m²-Gewicht, g | 84 | 70 | -16,6 |
| Glycerin, Gew.-% | 23 | 22,3 | - 3,1 |
| Platzdruck, kPa | 89 | 102,4 | +15,0 |
| Prüfkaliber in mm bei 21 kPa | 52,4-54,4 φ 53,4 | 53,4 | ± 0 |
| Quellwert, % | 130 | 151 | +16,0 |
| Permeation, l/m²·d bei 40 bar | 100 | 113 | +13,0 |

### Beispiel 3

Ein 19 g Hanffaserpapier wurde zu einem Schlauch vom Kaliber 70 geformt und von außen mit einem Gemisch aus

| | |
|---|---|
| 197,0 l | Viskoselösung, |
| 14,7 l | 4 gew.-%iger wäßriger Na-Alginat-Lösung, |
| 1,65 l | 50 gew.-%iger wäßriger Ca-Stearat-Dispersion und |
| 2,7 l | 10 gew-%iger wäßriger N-Vinyl-pyrrolidon-Copolymer-Lösung (^{(R)}Gafquat 755N) |

beschichtet. Die fertige Hülle enthielt, bezogen auf das Gewicht der trockenen Cellulose, 5 Gew.-% Alginat, 6 Gew.-% Calciumstearat und 2 Gew.-% des N-Vinyl-pyrrolidon-Copolymers. Beschichtet wurde mit einer um 20 Gew.-% gegenüber dem Standard verringerten Menge an Beschichtungslösung. Der beschichtete Schlauch wurde mit einer um 55 % gegenüber dem Standard erhöhten Geschwindigkeit durch die üblichen Bäder gezogen. Abschnitte von jeweils 70 m Länge wurden zu einer Raupe gerafft. Das Verhalten beim Füllen auf dem genannten Füll- und Clip-Automaten war normal. Ausfälle wurden nicht beobachtet. Reifeverlauf und Schälbarkeit waren gut.

**Tabelle 3**

| Merkmale | Vergleich 70er FDI Standard | Erfindung 70er FDI modifiziert | Abweichung in % |
|---|---|---|---|
| m²-Gewicht, g | 84 | 68 | -20,0 |
| Glycerin, Gew.-% | 22 | 0 | |
| Platzdruck, kPa | 68 | 76,2 | +12,0 |
| Prüfkaliber in mm bei 21 kPa | 74,6-77,6 φ 76,1 | 76,4 | + 0,4 |
| Quellwert, % | 130 | 120 | - 7,7 |
| Permeation, l/m²·d bei 40 bar | 100 | 83 | -17,0 |

## Patentansprüche

1. Verfahren zur Herstellung einer faserverstärkten, schlauchförmigen Nahrungsmittelhülle auf der Basis von regenerierter Cellulose, **dadurch gekennzeichnet, daß** darin eine um 10 bis 30 % gegenüber dem Standard, der 40 bis 55 g/m² an Cellulosehydrat ergibt, verminderte Menge an Viskoselösung bei einer gegenüber dem üblichen Wert von 20 bis 28 m/min um mindestens 25 % erhöhten Spinngeschwindigkeit eingesetzt wird.

2. Verfahren gemäß Anspruch 1, **dadurch gekennzeichnet, daß** die Viskosemenge um 15 bis 25 % reduziert ist.

3. Verfahren gemäß Anspruch 1 oder 2, **dadurch gekennzeichnet, daß** die Spinngeschwindigkeit um 25 bis 60 % erhöht ist.

4. Verfahren gemäß Anspruch 1, **dadurch gekennzeichnet, daß** die Nahrungsmittelhülle mit einem Faserpapier mit einem Gewicht von mindestens 17 g/m², bevorzugt 17 bis 25,4 g/m², hergestellt ist.

5. Verfahren gemäß Anspruch 4, **dadurch gekennzeichnet, daß** das Faserpapier aus Hanffasern besteht.

6. Verfahren gemäß einem oder mehreren der Ansprüche 1 bis 5, **dadurch gekennzeichnet, daß** die Nahrungsmittelhülle außen- oder doppelviskosiert ist.

7. Verfahren gemäß einem oder mehreren der Ansprüche 1 bis 6, **dadurch gekennzeichnet, daß** die Nahrungsmittelhülle zusätzliche polymere Verbindungen enthält, die bei der Regeneration kein Gas bilden.

8. Verfahren gemäß Anspruch 7, **dadurch gekennzeichnet, daß** der Anteil an zusätzlichen polymeren Verbindungen etwa 5 bis 20 Gew.-%, bezogen auf das Gewicht der trockenen Cellulose, beträgt.

9. Verfahren gemäß einem oder mehreren der Ansprüche 1 bis 8, **dadurch gekennzeichnet, daß** die Nahrungsmittelhülle Glycerin als sekundären Weichmacher enthält.

10. Verfahren gemäß Anspruch 9, **dadurch gekennzeichnet, daß** das Gewicht der glycerinhaltigen Nahrungsmittelhüllen um etwa 10 bis 15 %, das der glycerinfreien um etwa 15 bis 25 % unter dem der entsprechenden Standardhüllen liegt.

11. Verfahren gemäß einem oder mehreren der Ansprüche 1 bis 10, **dadurch gekennzeichnet, daß** die Nahrungsmittelhülle eine übliche Innenimprägnierung aufweist.

12. Verwendung der gemäß einem oder mehreren der Ansprüche 1 bis 11 hergestellten Nahrungsmittelhülle als künstliche Wursthülle.

## Claims

1. A process for producing a fiber-reinforced, tubular food casing based on regenerated cellulose, wherein an amount of viscose solution is employed, which is reduced by 10 to 30% compared to the standard, the standard yielding 40 to 55 g/m² of cellulose hydrate, and wherein the spinning speed is increased by at least 25%, relative to the conventionally employed value of 20 to 28 m/min.

2. The process as claimed in claim 1, wherein the amount of viscose is reduced by 15 to 25%.

3. The process as claimed in claim 1 or 2, wherein the spinning speed is increased by 25 to 60%.

4. Process as claimed in claim 1, wherein the food casing is produced using a fiber paper having a weight of at least 17 g/m², preferably 17 to 25.4 g/m².

5. The process as claimed in claim 4, wherein the fiber paper consists of hemp fibers.

6. The process as claimed in one or more of claims 1 to 5, wherein the food casing is outer- or double-viscosed.

7. The process as claimed in one or more of claims 1 to 6, wherein the food casing contains additional polymeric compounds which do not form gas during the regeneration.

8. The process as claimed in claim 7, wherein the amount of additional polymeric compounds is about 5 to 20% by weight, based on the weight of the dry cellulose.

9. The process as claimed in one or more of claims 1 to 8, wherein the food casing contains glycerol as secondary softener.

10. The process as claimed in claim 9, wherein the weight of the glycerol-containing processs is lower than that of the corresponding standard casings by about 10 to 15%, and that of the glycerol-free casings by about 15 to 25%.

11. The process as claimed in one or more of claims 1 to 10, wherein the food casing has a conventional internal impregnation.

12. Use of the food casing produced as claimed in one or more of claims 1 to 11 as a synthetic sausage casing.

## Revendications

1. Procédé pour la fabrication d'une enveloppe en forme de boyau pour produit alimentaire, renforcée avec des fibres, à base de cellulose régénérée, **caractérisée en ce qu'**on utilise dans celle-ci une quantité de solution de viscose qui est réduite de 10 à 30 %, par rapport à la solution de référence donnant de 40 à 55 g/m² d'hydrate de cellulose, avec une vitesse de filage augmentée d'au moins 25 % par rapport à la valeur usuelle de 20 à 28 m/min.

2. Procédé selon la revendication 1, **caractérisé en ce que** la quantité de viscose est réduite de 15 à 25 %.

3. Procédé selon la revendication 1 ou 2, **caractérisé en ce que** la vitesse de filage est augmentée de 25 à 60 %.

4. Procédé selonla revendication 1, **caractérisé en ce que** l'enve loppe pour produit alimentaire est fabriquée avec un papier fibreux avant un grammage d'au moins 17g/m², de préférence, de 17 à 25,4g/m².

5. Procédé selon la revendication 4, **caractérisé en ce que** le papier fibreux est constitué de fibres de chanvre.

6. Procédé selon une ou plusieurs des revendications 1 à 5, **caractérisé en ce que** l'enveloppe pour produit alimentaire est revêtue d'une couche externe de viscose ou d'une double couche de viscose.

7. Procédé selon une ou plusieurs des revendications 1 à 6, **caractérisé en ce que** l'enveloppe pour produit alimentaire contient des composés polymères supplémentaires qui ne forment pas de gaz lors de la régénération.

8. Procédé selon la revendication 7, **caractérisé en ce que** la proportion de composés polymères supplémentaires va d'environ 5 à 20 % en poids, par rapport au poids de la cellulose sèche.

9. Procédé selon une ou plusieurs des revendications 1 à 8, **caractérisé en ce que** l'enveloppe pour produit alimentaire contient du glycérol en tant que plastifiant secondaire.

10. Procédé selon la revendication 9, **caractérisé en ce que** le poids des enveloppes pour produit alimentaire contenant du glycérol est inférieur d'environ 10 à 15 %, et le poids de celles sans glycérol est inférieur d'environ 15 à 25 %, à celui des enveloppes types correspondantes.

11. Procédé selon une ou plusieurs des revendications 1 à 10, **caractérisé en ce que** l'enveloppe pour produit alimentaire présente une imprégnation interne usuelle.

12. Utilisation des enveloppes pour produit alimentaire fabriquées selon une ou plusieurs des revendications 1 à 11, en tant qu'enveloppe artificielle pour saucisse.
